# EUROPEAN PATENT SPECIFICATION

(11) **EP 4 455 632 B1**
(45) Date of publication and mention of the grant of the patent: **29.04.2026**
(21) Application number: 22909178.0
(22) Date of filing: 17.06.2022
(51) Int. Cl.: G01N 1/22, G01N 1/26

(54) **DETECTION SYSTEM COMPRISING A TRACE GAS SAMPLING DEVICE**
DETEKTIONSSYSTEM MIT EINER SPURENGASPROBENAHMEVORRICHTUNG
SYSTÈME DE DÉTECTION COMPRENANT UN DISPOSITIF D'ÉCHANTILLONNAGE DE GAZ À L'ÉTAT DE TRACE

(30) Priority: 24.12.2021 CN 202111597148
(43) Date of publication of application: 30.10.2024
(73) Proprietor: NUCTECH COMPANY LIMITED, Beijing 100084 (CN); Suzhou Weimu Intelligent System Co., Ltd., Suzhou, Jiangsu 215163 (CN)
(72) Inventor: CHEN, Changzhuo, Beijing 100084 (CN); BAO, Yuntai, Beijing 100084 (CN); LI, Yuanjing, Beijing 100084 (CN); XIAO, Yi, Beijing 100084 (CN); ZHANG, Shunsheng, Beijing 100084 (CN); WANG, Di, Beijing 100084 (CN); LIU, Yayun, Beijing 100084 (CN); LI, Lulu, Beijing 100084 (CN); HUANG, Yicheng, Beijing 100084 (CN); XU, Renran, Beijing 100084 (CN)
(74) Representative: Grünecker Patent- und Rechtsanwälte PartG mbB
(86) International application number: PCT/CN2022/099348
(87) International publication number: WO 2023/115846

(56) References cited:
- EP-A1- 3 379 228
- WO-A1-02/073161
- WO-A1-2017/165709
- CN-A- 109 164 056
- CN-A- 112 881 609
- CN-A- 113 109 506
- CN-A- 114 383 903
- RU-U1- 70 991
- US-A1- 2004 053 421
- US-A1- 2005 183 575
- US-A1- 2011 088 490
- US-A1- 2012 168 617

## Description

### TECHNICAL FIELD

At least an embodiment of the present disclosure relates to a security inspection system, and in particular, to a detection system including a trace vapor sampling device for security inspection.

### BACKGROUND

Ion Mobility Spectrometry (IMS) technology, as a trace inspection technology for rapidly inspecting explosives and drugs, has been widely used in security inspection in fields such as airports, customs, subways and government agencies. The IMS technology mainly includes three components: a drift tube for ion detection, a sample inlet (also known as a thermal desorber), and a swab for collecting trace samples. The IMS technology may also be used as a trace detection technology for industrial toxic gases and chemical warfare agents, and has been applied to security inspection in military and police systems.

At present, trace detection devices which use the IMS technology are mainly used as commonly used security inspection devices for cargo inspection. Such a device requires handholding a swab (wearing gloves) or a sampler to wipe and collect samples directly on surfaces of relevant personnel and cargoes, and then the collected swab is insert into the sample inlet to wait for analysis results. However, the entire sampling process of the device requires manual operation, which is very cumbersome.

During the cargo inspection, since various parts of the surface of an item to be inspected require to be sampled, and the swab belongs to consumables, a consumption of consumables may be increased accordingly when the number of inspection increases, and the application costs may be higher.

The commonly used trace detection devices are also difficult to directly inspect items inside packages of cargoes. When suspected contrabands are located inside the packages and are too far away from the operator or blocked by other items, it may be difficult for the operator to directly sample the suspected contrabands, and it may cause missed inspections when sampling surrounding surfaces.

EP3379228A1 discloses two gas extraction probes, each gas extraction probe including: a gas line including a gas channel formed in the gas line through which a gas can be flowed; a gas inlet through which a gas can be introduced into the gas channel; an adsorbent material disposed downstream of the gas inlet in the gas channel; a valve by means of which the gas channel between the gas inlet and the adsorption material can be shut off. A section of each gas line is in the form of a glass tube removable from the gas line. The adsorbent material is arranged in each glass tube. Each probe further comprises a pump downstream of the absorption material by means of which the gas channel can be subjected to reduced pressure for conducting a gas though the gas inlet into the gas channel and through the adsorbent material. A metal plate carries the gas extraction probes.

RU70991U1 discloses an apparatus for detecting explosives and explosive objects in vehicles, including one or more explosive vapor absorption units and a vacuum unit in the form of one or more suction pumps with flexible ducts connected thereto, the suction tips of which are provided with individual distance sensors and associated channels control of individual displacement drives, characterized in that between the suction extremities of the ducts are placed the extremities air ducts, from which air is blown outward towards the vehicle. The absorption units of the explosive vapor, for example in the form of a concentrator grid from the portable explosive detector BB, are placed between the suction end of each flexible duct and the corresponding pump.

US2005/183575A1 discloses an adapter for use with a low volume PUF sampler. The adapter is affixed over the open end of a PUF (polyurethane foam) sample cartridge. Sample tubing is affixed to an aperture in the adapter, and the free end of the sample tubing is then positioned at a desired sample location such as within an aircraft interior. As a vacuum is applied to the PUF cartridge, the adapter allows air collected at the sample point to pass through the tubing and through the interior of the PUF cartridge while preventing air surrounding the PUF cartridge from being drawn into the PUF cartridge except through the sample tubing.

### SUMMARY

In view of this, the main purpose of the present disclosure is to provide a detection system, so as to at least partially solve at least one technical problem mentioned above and in other aspects. The invention is defined by the appended claims.

According to the present invention a detection system according to claim 1 is provided.

According to the embodiments of the present disclosure, the pre-concentrator is provided with a first heating element, and the first heating element is configured to heat the adsorption medium, so as to separate the target vapor adsorbed on the adsorption medium from the adsorption medium.

According to the embodiments of the present disclosure, a flow rate of the air pump is greater than or equal to 1L/min.

According to the embodiments of the present disclosure, the sampling channel includes: a sample inlet provided with a fast interface, the sampling hose is connected to the fast interface of the sample inlet; and an exhaust port configured to discharge a residual vapor in the pre-concentrator.

According to the embodiments of the present disclosure, the sampling channel further including: an information recording apparatus configured to record target information of the target.

According to the embodiments of the present disclosure, the information recording apparatus includes a camera, a scanning gun and a wireless radio frequency identification reader-writer.

According to the embodiments of the present disclosure, the control apparatus further includes: a communication unit connected to the camera, the scanning gun and the wireless radio frequency identification reader-writer respectively and configured to transmit the target information, the communication unit includes a communication interface configured to receive the target information.

According to the embodiments of the present disclosure, the moving carrier is a robot moving carrier.

According to the embodiments of the present disclosure, the analysis device includes: an analysis device sample inlet configured to acquire the target vapor; a detection apparatus configured to inspect the target vapor to obtain an inspection signal; a computing apparatus connected to the detection apparatus and configured to calculate and analyze the inspection signal so as to obtain the analysis result.

According to the embodiments of the present disclosure, a second heating element is provided on the analysis device sample inlet, and the second heating element is configured to heat the adsorption medium placed in the analysis device sample inlet so as to acquire the target vapor.

According to the embodiments of the present disclosure, the analysis device further includes: a semi-permeable membrane provided between the analysis device sample inlet and the detection apparatus and configured to selectively filter the target vapor.

According to the embodiments of the present disclosure, the detection apparatus includes at least one of an ion mobility spectrometer, a miniature mass spectrometer, a GC-IMS, a FAIMS, an electrochemical sensor array, a photoacoustic spectrum sensor, a QCL infrared spectrum system, an amplifying fluorescent polymer sensor and/or a quartz crystal microbalance detector.

According to the embodiments of the present disclosure, the trace vapor sampling device and the detection system provided by the present disclosure, through acquiring the target vapor using the sampling hose, adsorbing the target vapor onto the adsorption medium using the pre-concentrator, and acquiring the target vapor using at least one air pump to drive the sampling hose of the communicated sampling apparatus, it is possible to achieve the sampling of the target to be inspected. This sampling process does not require manual operation, which reduces labor consumption.

### BRIEF DESCRIPTION OF THE DRAWINGS

FIG. 1 is a schematic diagram of a structure of a sampling device;
FIG. 2 is a schematic diagram of a partial structure of the sampling device in FIG. 1;
FIG. 3 is a block diagram of a structure of an analysis device according to an aspect of the present disclosure.

### References numerals:

1. moving carrier
2. sampling apparatus
   21 sampling hose
   22 sampling channel
      221 sample inlet
      222 exhaust port
   23 pre-concentrator
   24 adsorption medium
3. control apparatus
4. information recording apparatus
   41 camera
   42 scanning gun
   43 wireless radio frequency identification reader-writer
5 analysis device sample inlet
6 semi-permeable membrane
7 detection apparatus
8 computing apparatus
9 air pump

### DETAILED DESCRIPTION OF EMBODIMENTS

In order to make purposes, technical solutions and advantages of the present disclosure clearer, the present disclosure will be further explained in detail below, combined with specific embodiments and with reference to the accompanying drawings.

However, it should be understood that these descriptions are only illustrative and not intended to limit the scope of the present disclosure. In addition, the descriptions of well-known structures and technologies are omitted in the following explanation to avoid unnecessary confusion with the concept of the present disclosure. Various structural diagrams according to the embodiments of the present disclosure are shown in the accompanying drawings. These drawings are not drawn to scale, and for the purpose of clear expression, certain details may be enlarged and certain details may be omitted. the target vapor.

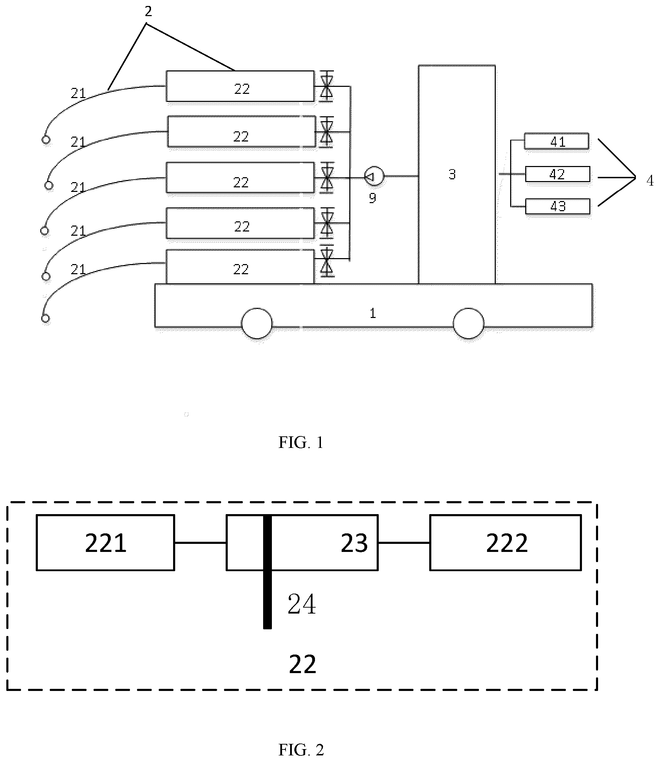

FIG. 1 is a schematic diagram of a structure of a sampling device.

As shown in FIG. 1, the trace vapor sampling device includes: a moving carrier 1, a plurality of sampling apparatuses 2, a control apparatus 3 and at least one air pump 9. The plurality of sampling apparatuses 2 are provided on the moving carrier 1, the sampling apparatus includes a sampling hose 21, a sampling channel 22 and a pre-concentrator 23. The sampling hose 21 is configured to go deep into an inside of a target to be inspected (such as a container, a cargo box, a luggage box, etc.) to acquire a target vapor inside the target. The sampling hose 21 may go deep into the inside of the target to be inspected, for example, the sampling hose may go deep into a package of the cargo to be inspected. In addition, a length of the sampling hose 21 may be adjusted, so that the sampling hose 21 may go deep into the inside of the target to be inspected by a long distance. In addition, the sampling hose 21 may go deep into the inside of the target to be inspected by bypassing blocking of a physical structure. The sampling channel 22 is connected to the sampling hose 21, and the sampling channel is configured to transmit the target vapor.

FIG. 2 is a schematic diagram of a partial structure of the sampling apparatus in FIG. 1.

Referring to FIG. 1 and FIG. 2 in combination, the pre-concentrator 23 is provided in the sampling channel 22. An adsorption medium 24 is placed inside the pre-concentrator 23. The target vapor is adsorbed onto the adsorption medium 24.

As shown in FIG. 1, the control apparatus 3 is provided on the moving carrier 1. Each of the at least one air pump 9 is controllably communicated with one or more sampling apparatuses 2. The control apparatus 3 controls each air pump 9 to be selectively communicated with one sampling apparatus 2 or one of the plurality of sampling apparatuses 2, so that the air pump 9 drives the sampling hose 21 of the communicated sampling apparatus 2 to acquire the target vapor.

The sampling device provided in the present disclosure acquires the target vapor using the sampling hose 21, the target vapor is adsorbed onto the adsorption medium 24 using the pre-concentrator 23, and the target vapor is acquired using the sampling hose 21 of the communicated sampling apparatus driven by the at least one vapor pump 9, thus the sampling of a target to be inspected is achieved. This sampling process does not require manual operation.

The sampling device according to the embodiment of the present disclosure avoids using the swab for sampling and therefore the costs are low.

Continuing to refer to FIG. 2, the sampling channel 22 includes: a sample inlet 221 and an exhaust port 222. A fast interface is provided on the sample inlet, and the sampling hose 21 is connected to the fast interface of the injection port 221. The exhaust port 222 is configured to discharge residual vapor in the pre-concentrator 23.

According to an example not part of the present invention, the sampling device includes an air pump 9. The control apparatus 3 controls the air pump 9 to be selectively communicated with one of the plurality of sampling apparatuses 2. In the present example, by selectively communicating with one of the plurality of sampling apparatuses 2 using an air pump 9, the sampling apparatuses 2 may be alternately used by switching among the sampling apparatuses.

According to the present invention, the sampling device includes a plurality of air pumps 9. The control apparatus 3 controls each air pump 9 to be communicated with a corresponding sampling apparatus 2. In the present invention, by providing the plurality of air pumps 9 and communicated each air pump 9 with a corresponding sampling apparatus 2, it is possible to achieve simultaneous sampling of a plurality of targets.

According to the embodiment of the present disclosure, the pre-concentrator 23 is provided with a first heating element (not shown in the drawing). The first heating element is configured to heat the adsorption medium 24 so as to separate the target vapor adsorbed onto the adsorption medium 24 from the adsorption medium 24.

According to the embodiment of the present disclosure, a flow rate of the air pump 9 is greater than or equal to 1L/min. By using an air pump 9 with high flow rate, it is possible to sample a target to be inspected with too low saturated vapor pressure, such as explosives, drugs, and other contrabands that are not easily volatile at room temperature and atmospheric pressure. The flow rate of the air pump 9 may be set according to volumes of cargoes. When the air pump is turned on, the target vapor is captured and accumulated onto an adsorption medium of a special material, and an inhalation stops after a preset sampling time.

With reference to FIG. 1, according to the embodiment of the present disclosure, the above sampling device further includes an information recording apparatus 4 configured to record target information of the target. The information recording apparatus includes a camera 41, a scanning gun 42 and a wireless radio frequency identification reader-writer 43, and the information recording apparatus is used to record information of cargoes and items to be inspected.

According to the embodiment of the present disclosure, the control apparatus 3 further includes a communication unit (not shown in the drawing) connected to the camera 41, the scanning gun 42 and the wireless radio frequency identification reader-writer 43, respectively, and is configured to transmit the target information. The communication unit includes a communication interface (not shown in the drawing) for receiving the target information.

According to the embodiment of the present, the moving carrier is a robot moving carrier. The moving carrier may be manually controlled or automatically controlled by the robot, so as to reach a vicinity of the cargo to be inspected.

A detection system is provided, including the trace vapor sampling device as described above and an analysis device. The analysis device is configured to inspect and analyze the target vapor acquired by the sampling apparatus or the adsorption medium 24 adsorbed with the target vapor so as to obtain an analysis result.

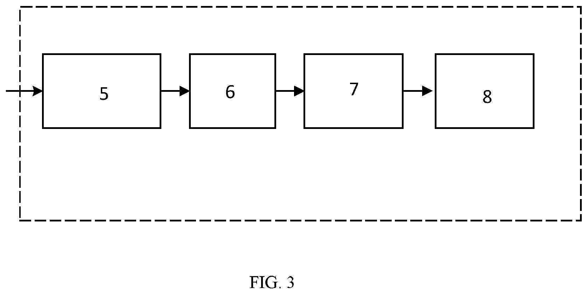

FIG. 3 is a schematic diagram of a structure of an analysis device according to an aspect of the present disclosure.

As shown in FIG. 3, the detection device includes: an analysis device sample inlet 5, a detection apparatus 7 and a computing apparatus 8. The analysis device sample inlet 5 is configured to acquire the target vapor. The detection apparatus 7 is configured to inspect the target vapor to obtain an inspection signal. The computing apparatus 8 is connected to the detection apparatus 7 and configured to calculate and analyze the inspection signal so as to obtain the analysis result.

According to a specific embodiment of the present disclosure, a second heating element (not shown in the drawing) is provided on the analysis device sample inlet 5. The second heating element is configured to heat the adsorption medium 24 placed in the analysis device sample inlet 5 so as to acquire the target vapor.

When inspecting the target vapor, the sampling channel 22 may also be disassembled from the sampling device, and the exhaust port 222 of the sampling channel 22 may be communicated with the detection device sample inlet 5. The first heating element provided inside the pre-concentrator 23 instantly heats the adsorption medium 24, the target vapor adsorbed onto the adsorption medium 24 is detached and enters the analysis device sample inlet 5, so that the analysis device sample inlet 5 may acquire the target vapor.

According to the embodiment of the present disclosure, the analysis device further includes a semi-permeable membrane 6. The semi-permeable membrane 6 is provided between the analysis device sample inlet 5 and the detection apparatus 7, and is configured to filter the target vapor.

According to the embodiment of the present disclosure, the detection apparatus includes at least one of an ion mobility spectrometer, a miniature mass spectrometer, a GC-IMS, a FAIMS, an electrochemical sensor array, a photoacoustic spectrum sensor, a QCL infrared spectrum system, an amplifying fluorescent polymer sensor, and/or a quartz crystal microbalance detector. The target vapor collected in the present disclosure may be cross-validated from different perspectives using a plurality of inspection techniques, which is more accurate.

The trace vapor sampling device and the detection system according to the embodiments of the present disclosure overcomes disadvantages that the relevant inhalation vapor sampling inspection system may not inspect samples with too low saturated vapor pressure. The trace vapor sampling device and the detection system of the embodiments of the present disclosure may achieve the sampling and inspection of contrabands such as explosives, drugs, etc. that are not easily volatile at room temperature and atmospheric pressure and have too low saturated vapor pressure. A sensitivity of relevant inhalation vapor sampling inspection system is usually at ppb-ppm level. The trace vapor sampling device and the inspection system in the embodiments of the present disclosure may have a higher inspection sensitivity, which may reach a level of ppb to ppt.

The trace vapor sampling device and the detection system according to the embodiments of the present disclosure overcomes disadvantages of the related inhalation analysis device that is difficult to conduct a one-time inspection of large air cargo boxes, truck carriages, and container loads containing a large number of items without opening packages of cargoes. The trace vapor sampling device and the detection system of the embodiments of the present disclosure have a plurality of sampling apparatuses, which may achieve simultaneous inspection of a plurality of cargoes.

The trace vapor sampling device and the detection system according to the embodiments of the present disclosure overcomes disadvantages that the relevant analysis device may not quickly sample an entire box of cargoes in a short period of time. By using the air pump with a high flow rate, it is possible to achieve rapid inspection of cargoes with large volumes.

The trace vapor sampling device and the detection system according to the embodiments of the present disclosure may be applied in fields of civil aviation, customs, logistics and other applications.

The specific embodiments described above provide further detailed explanations of purposes, technical solutions and beneficial effects of the present disclosure. It should be understood that the above explanations are only specific embodiments of the present disclosure and are not intended to limit the present disclosure.

## Claims

1. A detection system, comprising:
a trace vapor sampling device, comprising:
a movable carrier (1);
a plurality of sampling apparatuses (2) provided on the movable carrier (1), wherein each of the plurality of sampling apparatuses (2) comprises:
a sampling hose (21) configured to go deep into an inside of a target to be inspected and acquire a target vapor inside the target;
a sampling channel (22) connected to the sampling hose (21) and configured to transmit the target vapor; and
a pre-concentrator (23) provided in the sampling channel (22), wherein an adsorption medium (24) is placed inside the pre-concentrator (23), and the target vapor is adsorbed onto the adsorption medium (24);
a control apparatus (3) provided on the movable carrier (1); and
a plurality of air pumps (9), wherein the control apparatus (3) is configured to control each air pump (9) to be communicated with a corresponding sampling apparatus (2), so that the plurality of air pumps (9) are configured to drive the sampling hoses (21) of the plurality of communicated sampling apparatuses (2) to acquire a plurality of target vapors respectively, to perform simultaneous sampling of the plurality of target vapors; and
an analysis device configured to inspect and analyze the target vapor acquired by the sampling apparatus or the adsorption medium adsorbed with the target vapor so as to obtain an analysis result,
wherein the sampling channel (22) is further configured to be disassembled from the sampling device and to be communicated with the analysis device.

2. The detection system of claim 1, wherein the pre-concentrator (23) is provided with a first heating element, and the first heating element is configured to heat the adsorption medium, so as to separate the target vapor adsorbed on the adsorption medium from the adsorption medium.

3. The detection system of claim 1, wherein the analysis device comprises:
an analysis device sample inlet (5) configured to acquire the target vapor;
a detection apparatus (7) configured to inspect the target vapor to obtain an inspection signal; and
a computing apparatus (8) connected to the detection apparatus (7) and configured to calculate and analyze the inspection signal so as to obtain the analysis result.

4. The detection system of claim 3, wherein a second heating element is provided on the analysis device sample inlet (5), and the second heating element is configured to heat the adsorption medium (24) placed in the analysis device sample inlet (5) so as to acquire the target vapor.

5. The detection system of claim 3, wherein the analysis device further comprises: a semipermeable membrane (6) provided between the analysis device sample inlet (5) and the detection apparatus (7) and configured to selectively filter the target vapor.

6. The detection system of any one of claims 3 to 5, wherein the detection apparatus (7) comprises at least one of an ion mobility spectrometer, a miniature mass spectrometer, a GC-IMS, a FAIMS, an electrochemical sensor array, a photoacoustic spectrum sensor, a QCL infrared spectrum system, an amplifying fluorescent polymer sensor and/or a quartz crystal microbalance detector.

7. The detection system of claim 1, wherein a flow rate of the air pump (9) is greater than or equal to 1L/min.

8. The detection system of claim 1, wherein the sampling channel (22) comprises:
a sample inlet (221) provided with a fast interface, wherein the sampling hose (21) is connected to the fast interface of the sample inlet (221); and
an exhaust port (222) configured to discharge a residual vapor in the pre-concentrator.

9. The detection system of claim 1, wherein the trace vapor sampling device further comprises:
an information recording apparatus (4) configured to record target information of the target.

10. The detection system of claim 9, wherein the information recording apparatus comprises a camera, a scanning gun and a wireless radio frequency identification reader-writer.

11. The detection system of claim 10, wherein the control apparatus further comprises:
a communication unit connected to the camera, the scanning gun and the wireless radio frequency identification reader-writer respectively and configured to transmit the target information, wherein the communication unit comprises a communication interface configured to receive the target information.

12. The detection system of claim 1, wherein the movable carrier is a robot movable carrier.

## Patentansprüche

1. Detektionssystem, das umfasst:
eine Dampfspurenprobenahmevorrichtung, die umfasst:
einen beweglichen Träger (1);
eine Vielzahl von Probenahmeeinrichtungen (2), die auf dem beweglichen Träger (1) vorgesehen sind, wobei jede der Vielzahl von Probenahmeeinrichtungen (2) Folgendes umfasst:
einen Probenahmeschlauch (21), der dazu konfiguriert ist, tief in das Innere eines zu untersuchenden Ziels zu reichen und einen Zieldampf im Inneren des Ziels zu erlangen;
einen Probenahmekanal (22), der an den Probenahmeschlauch (21) angeschlossen und dazu konfiguriert ist, den Zieldampf zu übertragen; und
einen Vorkonzentrator (23), der in dem Probenahmekanal (22) vorgesehen ist, wobei ein Adsorptionsmedium (24) innerhalb des Vorkonzentrators (23) platziert ist und der Zieldampf an das Adsorptionsmedium (24) adsorbiert wird;
eine Steuereinrichtung (3), die auf dem beweglichen Träger (1) vorgesehen ist; und
eine Vielzahl von Luftpumpen (9), wobei die Steuereinrichtung (3) dazu konfiguriert ist, jede Luftpumpe (9) so zu steuern, dass sie mit einer entsprechenden Probenahmeeinrichtung (2) in Verbindung steht, so dass die Vielzahl von Luftpumpen (9) dazu konfiguriert ist, die Probenahmeschläuche (21) der Vielzahl von verbundenen Probenahmeeinrichtungen (2) anzutreiben, um jeweils eine Vielzahl von Zieldämpfen zu erlangen und eine gleichzeitige Probenahme der Vielzahl von Zieldämpfen durchzuführen; und
eine Analysevorrichtung, die dazu konfiguriert ist, den von der Probenahmeeinrichtung erlangten Zieldampf oder das mit dem Zieldampf adsorbierte Adsorptionsmedium zu untersuchen und zu analysieren, um ein Analyseergebnis zu erhalten,
wobei der Probenahmekanal (22) des Weiteren dazu konfiguriert ist, von der Probenahmevorrichtung abmontiert und mit der Analysevorrichtung verbunden zu werden.

2. Detektionssystem nach Anspruch 1, wobei der Vorkonzentrator (23) mit einem ersten Heizelement versehen ist und das erste Heizelement dazu konfiguriert ist, das Adsorptionsmedium zu erhitzen, um den an dem Adsorptionsmedium adsorbierten Zieldampf von dem Adsorptionsmedium zu trennen.

3. Detektionssystem nach Anspruch 1, wobei die Analysevorrichtung umfasst:
einen Analysevorrichtungsprobeneinlass (5), der dazu konfiguriert ist, den Zieldampf zu erlangen;
eine Detektionseinrichtung (7), die dazu konfiguriert ist, den Zieldampf zu untersuchen, um ein Untersuchungssignal zu erhalten; und
eine Recheneinrichtung (8), die an die Detektionseinrichtung (7) angeschlossen und dazu konfiguriert ist, das Untersuchungssignal zu berechnen und zu analysieren, um das Analyseergebnis zu erhalten.

4. Detektionssystem nach Anspruch 3, wobei ein zweites Heizelement an dem Analysevorrichtungsprobeneinlass (5) vorgesehen ist und das zweite Heizelement dazu konfiguriert ist, das in dem Analysevorrichtungsprobeneinlass (5) platzierte Adsorptionsmedium (24) zu erhitzen, um den Zieldampf zu erlangen.

5. Detektionssystem nach Anspruch 3, wobei die Analysevorrichtung des Weiteren umfasst:
eine semipermeable Membran (6), die zwischen dem Analysevorrichtungsprobeneinlass (5) und der Detektionseinrichtung (7) vorgesehen und dazu konfiguriert ist, den Zieldampf selektiv zu filtern.

6. Detektionssystem nach einem der Ansprüche 3 bis 5, wobei die Detektionseinrichtung (7) mindestens eines von einem lonenmobilitätsspektrometer, einem Miniaturmassenspektrometer, einem GC-IMS, einem FAIMS, einem elektrochemischen Sensorarray, einem photoakustischen Spektralsensor, einem QCL-Infrarotspektrumsystem, einem verstärkenden Fluoreszenzpolymersensor und/oder einem Quarzkristallmikrowaagedetektor umfasst.

7. Detektionssystem nach Anspruch 1, wobei eine Durchflussrate der Luftpumpe (9) größer oder gleich 1 I/min ist.

8. Detektionssystem nach Anspruch 1, wobei der Probenahmekanal (22) umfasst:
einen Probeneinlass (221), der mit einer schnellen Schnittstelle versehen ist, wobei der Probenahmeschlauch (21) mit der schnellen Schnittstelle des Probeneinlasses (221) verbunden ist; und
eine Auslassöffnung (222), die dazu konfiguriert ist, einen Restdampf im Vorkonzentrator abzuführen.

9. Detektionssystem nach Anspruch 1, wobei die Dampfspurenprobenahmevorrichtung des Weiteren umfasst:
eine Informationsaufzeichnungseinrichtung (4), die dazu konfiguriert ist, Zielinformationen des Ziels aufzuzeichnen.

10. Detektionssystem nach Anspruch 9, wobei die Informationsaufzeichnungseinrichtung eine Kamera, eine Abtastpistole und ein drahtloses Funkfrequenz-Identifikations-Lese-/Schreibgerät umfasst.

11. Detektionssystem nach Anspruch 10, wobei die Steuereinrichtung des Weiteren umfasst:
eine Kommunikationseinheit, die an die Kamera, die Abtastpistole bzw. das drahtlose Funkfrequenz-Identifikations-Lese-/Schreibgerät angeschlossen und dazu konfiguriert ist, die Zielinformationen zu übertragen, wobei die Kommunikationseinheit eine Kommunikationsschnittstelle umfasst, die dazu konfiguriert ist, die Zielinformationen zu empfangen.

12. Detektionssystem nach Anspruch 1, wobei der bewegliche Träger ein beweglicher Roboterträger ist.

## Revendications

1. Système de détection, comprenant :
un dispositif d'échantillonnage de vapeur à l'état de trace, comprenant :
un support mobile (1) ;
une pluralité d'appareils d'échantillonnage (2) agencés sur le support mobile (1), dans lequel chacun de la pluralité d'appareils d'échantillonnage (2) comprend :
un tuyau d'échantillonnage (21) configuré pour pénétrer profondément dans un intérieur d'une cible à inspecter et pour acquérir une vapeur de cible à l'intérieur de la cible ;
un canal d'échantillonnage (22) relié au tuyau d'échantillonnage (21) et configuré pour transmettre la vapeur cible ; et
un pré-concentrateur (23) agencé dans le canal d'échantillonnage (22), dans lequel un milieu d'adsorption (24) est placé à l'intérieur du pré-concentrateur (23), et la vapeur cible est adsorbée sur le milieu d'adsorption (24) ;
un appareil de commande (3) agencé sur le support mobile (1) ; et
une pluralité de pompes à air (9), dans lequel l'appareil de commande (3) est configuré pour commander chaque pompe à air (9) pour qu'elle communique avec un appareil d'échantillonnage (2) correspondant, de sorte que la pluralité de pompes à air (9) est configurée pour entraîner les tuyaux d'échantillonnage (21) de la pluralité d'appareils d'échantillonnage (2) en communication afin d'acquérir respectivement une pluralité de vapeurs cibles, afin d'effectuer un échantillonnage simultané de la pluralité de vapeurs cibles ; et
un dispositif d'analyse configuré pour inspecter et analyser la vapeur cible acquise par l'appareil d'échantillonnage ou le milieu d'adsorption adsorbé avec la vapeur cible afin d'obtenir un résultat d'analyse,
dans lequel le canal d'échantillonnage (22) est en outre configuré pour être démonté du dispositif d'échantillonnage et pour être en communication avec le dispositif d'analyse.

2. Système de détection selon la revendication 1, dans lequel le pré-concentrateur (23) est équipé d'un premier élément chauffant, et le premier élément chauffant est configuré pour chauffer le milieu d'adsorption, de manière à séparer du milieu d'adsorption la vapeur cible adsorbée sur le milieu d'adsorption.

3. Système de détection selon la revendication 1, dans lequel le dispositif d'analyse comprend :
une entrée d'échantillon de dispositif d'analyse (5) configurée pour acquérir la vapeur cible ;
un appareil de détection (7) configuré pour inspecter la vapeur cible afin d'obtenir un signal d'inspection ; et
un appareil informatique (8) relié à l'appareil de détection (7) et configuré pour calculer et analyser le signal d'inspection de manière à obtenir le résultat d'analyse.

4. Système de détection selon la revendication 3, dans lequel un second élément chauffant est agencé sur l'entrée d'échantillon de dispositif d'analyse (5), et le second élément chauffant est configuré pour chauffer le milieu d'adsorption (24) placé dans l'entrée d'échantillon de dispositif d'analyse (5) de manière à acquérir la vapeur cible.

5. Système de détection selon la revendication 3, dans lequel le dispositif d'analyse comprend en outre :
une membrane semi-perméable (6) agencée entre l'entrée d'échantillon d'appareil d'analyse (5) et l'appareil de détection (7) et configurée pour filtrer sélectivement la vapeur cible.

6. Système de détection selon l'une quelconque des revendications 3 à 5, dans lequel l'appareil de détection (7) comprend au moins l'un parmi un spectromètre de mobilité ionique, un spectromètre de masse miniature, un GC-IMS, un FAIMS, un réseau de capteurs électrochimiques, un capteur de spectre photoacoustique, un système de spectre infrarouge QCL, un capteur polymère fluorescent amplificateur et/ou un détecteur microbalance à cristal de quartz.

7. Système de détection selon la revendication 1, dans lequel un débit de la pompe à air (9) est supérieur ou égal à 1 I/min.

8. Système de détection selon la revendication 1, dans lequel le canal d'échantillonnage (22) comprend :
une entrée d'échantillon (221) équipée d'une interface rapide, dans lequel le tuyau d'échantillonnage (21) est relié à l'interface rapide de l'entrée d'échantillon (221) ; et
un orifice d'échappement (222) configuré pour évacuer une vapeur résiduelle dans le pré-concentrateur.

9. Système de détection selon la revendication 1, dans lequel le dispositif d'échantillonnage de vapeur à l'état de trace comprend en outre :
un appareil d'enregistrement d'informations (4) configuré pour enregistrer les informations de cible concernant la cible.

10. Système de détection selon la revendication 9, dans lequel l'appareil d'enregistrement d'informations comprend une caméra, un canon à balayage et un dispositif de lecture-écriture d'identification radiofréquence sans fil.

11. Système de détection selon la revendication 10, dans lequel l'appareil de commande comprend en outre :
une unité de communication reliée respectivement à la caméra, au canon à balayage et au dispositif de lecture-écriture d'identification radiofréquence sans fil et configurée pour transmettre les informations de cible, dans lequel l'unité de communication comprend une interface de communication configurée pour recevoir les informations de cible.

12. Système de détection selon la revendication 1, dans lequel le support mobile est un support mobile robot.
